# EUROPEAN PATENT APPLICATION

(11) **EP 4 321 556 A1**
(43) Date of publication of application: **14.02.2024**
(21) Application number: 22783957.8
(22) Date of filing: 01.04.2022
(51) Int. Cl.: C08G 77/16, C08G 77/06, C08G 77/34, C08G 77/24, C07F 7/04, C07F 7/20, C07F 7/21

(54) **PROCESS FOR PRODUCING ORGANOSILICON LINEAR BODY**

(30) Priority: 09.04.2021 CN 202110387311
(71) Applicant: Jiangxi Bluestar Xinghuo Silicone Co., Ltd., Jiujiang, Jiangxi 330300 (CN)
(72) Inventor: ZHANG, Larry, Jiujiang, Jiangxi 330319 (CN); WANG, Haidong, Jiujiang, Jiangxi 330319 (CN); ZHANG, Nianyun, Jiujiang, Jiangxi 330319 (CN); LIAO, Li, Jiujiang, Jiangxi 330319 (CN); HU, Yingru, Jiujiang, Jiangxi 330319 (CN); DU, Kai, Jiujiang, Jiangxi 330319 (CN); OUYANG, Wenwu, Jiujiang, Jiangxi 330319 (CN); GUO, Shuyong, Jiujiang, Jiangxi 330319 (CN); CHEN, Zhen, Jiujiang, Jiangxi 330319 (CN); LIAO, Guigen, Jiujiang, Jiangxi 330319 (CN)
(74) Representative: Garcia Escomel, Cristina
(86) International application number: PCT/CN2022/084729
(87) International publication number: WO 2022/213890

(57) **Abstract**

The present invention relates to a process for producing a low-volatile-matter organosilicon linear body. The process comprises: removing chlorine ions from a dimethyl dichlorosilane hydrolysate, and reducing volatile matters at 180-280°C and -0.0955 to -0.0998 MPa. The obtained organosilicon linear body has volatile matters of less than 0.5%, a viscosity of 50-150 mm2/s and a content of chloride ions of lower than 1 ppm. The process can be widely applied to the production of organosilicon subsequent products such as low-ring-body-content 107 glue, low-ring-body-content amino silicone oil, low-ring-body-content methyl silicone oil, and low-ring-body-content vinyl silicone oil, and can meet requirements of the European Union on content limitations of ring bodies in a polymer.

## Description

The present application claims the priority of the prior application with invention title "PROCESS FOR PRODUCING ORGANOSILICON LINEAR BODY" and patent application no. 202110387311.8, submitted to CNIPA on April 9, 2021. The full text of the prior application is incorporated in the present application by reference.

### Technical field

The present invention relates to the field of organosilicon compound synthesis, in particular to a method for producing an organosilicon linear body, in which dimethyldichlorosilane hydrolysate undergoes pre-treatment and small-molecule removal to obtain an organosilicon cyclic body and an organosilicon linear body with a chloride ion content lower than 1 ppm and a content of volatiles lower than 0.5%.

### Background art

Dimethyldichlorosilane hydrolysate consists of 20% - 80% linear siloxane (linear body) and 80% - 20% cyclic siloxane (cyclic body). A conventional process for processing the hydrolysate is the cracking technique, for example Chinese patent applications CN101148455A, CN104119372A and CN104497035A, etc. Of these, CN101148455A has disclosed opening the chains of the linear body and cyclic body of the hydrolysate before forming them into rings again to produce a cyclic body under basic catalyst conditions; during the cracking reaction, residue needs to be discharged once every 7 days, and the process has drawbacks, namely high unit consumption of hydrolysate as well as high energy consumption. Furthermore, when the conventional cracking product DMC (a cyclic siloxane mixture) is used to produce downstream products, ring-opening polymerization is dominant; this reaction is a balanced reaction, and there will be 15% production of low boilers, but the cyclic use of low boilers is relatively wasteful of energy. More importantly, the downstream products produced from DMC have a high content of volatiles, so struggle to meet the requirement that the European Union's D4, D5 and D6 content indices for polymers be less than 0.01%.

On the other hand, Chinese patents CN104031084B, CN105175730B and CN106083910B all propose separating hydrolysate into the cyclic body and linear body, with the cyclic body and linear body thus obtained being used in the production of 110 rubber and 107 rubber, respectively. CN106083910B uses a method of one-stage flash evaporation in a vacuum (-80 to -95 KPa) to remove small molecules, and the temperature at which small-molecule removal is carried out is strictly controlled at 120 - 150°C. Although claim 4 of that patent defines the linear body content in the linear body obtained by separation to be 85 - 99%, the data in the Examples shows that the separation temperature is controlled at 130 - 135°C, and the linear body content is 90 - 93%, being unable to reach 98% or higher. This is also confirmed by the patent CN104031084B: it can be seen from the results of Examples 1-3 that when two-stage small-molecule removal is used to separate the cyclic body and linear body under a vacuum of -0.097 MPa, the content of the linear body obtained by separation fluctuates between 75 and 98% as the separation temperature is varied between 100 and 200°C. To achieve a high linear body yield, the temperature at which small-molecule removal is carried out must be strictly controlled at 140 - 160°C. This is because, once the temperature at which small-molecule removal is carried out exceeds 150°C, the content of the linear body obtained by separation conversely falls, and it is only possible to obtain a linear body product with a maximum content of 98% when the temperature is controlled at 150°C. As can be seen, in CN105175730B, in which small-molecule removal is carried out at a lower temperature, the content of impurities (mainly low-molecular-weight substances, generally called "low boilers" in this field) in the linear body will in fact be very high, and the linear body content should not exceed 98%.

Thus, the prior art solutions for processing dimethyldichlorosilane hydrolysate have not been able to bring the content of volatiles in the linear body product to lower than 1%, i.e. have not solved the problem of the high content of low volatiles. Octamethylcyclotetrasiloxane (D4), decamethylcyclopentasiloxane (D5) and dodecamethylcyclohexasiloxane (D6) have been newly added to the SVHCs in the European Union's REACH regulatory standard, with a requirement that the contents used in cosmetics and personal care products, polishing and waxing, washing and cleansing products and textile processed products and dyes, etc. must be less than 0.01%.

There is a need in industry for a new method of processing dimethyldichlorosilane hydrolysate, and a new method of obtaining a satisfactory linear body product.

### Summary of the invention

The inventors of the present invention discovered through research that controlling the content of impurities, especially chlorine, in dimethyldichlorosilane hydrolysate will help to improve the operating conditions of downstream separation of the cyclic body and linear body, not only avoiding decomposition or reaction of the linear body during the separating operation, but also enabling the hydrolysate to suit higher separation conditions, providing a pathway for reducing the content of low volatiles in the linear body after separation; the present invention was thereby accomplished.

The present invention provides a method for producing an organosilicon linear body product, comprising:
S1: pre-treating dimethyldichlorosilane hydrolysate so that the content of chloride ions in the hydrolysate after pre-treatment is less than or equal to 1 ppm;
S2: subjecting the hydrolysate resulting from the pre-treatment of step S1 to small-molecule removal at reduced pressure, to separate an organosilicon cyclic body and an organosilicon linear body therein, wherein the small-molecule removal at reduced pressure is carried out at a temperature of 180 - 280°C and a pressure of ≤ -0.0955 MPa.

The dimethyldichlorosilane hydrolysate comes from an upstream process and has the meaning commonly known in the art, mainly containing 80 - 20% linear siloxane, 20 - 80% cyclic body (including octamethylcyclotetrasiloxane (D4), decamethylcyclopentasiloxane (D5), etc.) and other trace impurities, among which the main impurities include water, chloride ions and hydrocarbons.

According to the present invention, the pre-treatment in step S1 may employ various separation methods known in the art for removing impurities, including but not limited to filtration, adsorption, etc., for example, filtration by filter, activated carbon adsorption, molecular sieve adsorption, resin adsorption, etc. The activated carbon, molecular sieve and resin may be activated carbon, molecular sieve and resin commonly used in the art for adsorbing or filtering impurities such as chloride ions, for example D201 resin, D301 resin, etc. To improve the chloride ion removal result, multiple separation methods may be used in combination; for example, activated carbon, molecular sieve and resin adsorption may be used in combination. As another example, a method for removing largeparticle impurities and a method for removing small-molecule substances may be used in combination.

In some embodiments of the present invention, dimethyldichlorosilane hydrolysate flows through a pre-treatment apparatus of step S1 at a flow rate of 3 -15 m³/h, and preferably flows through the pre-treatment apparatus of step S1 at a flow rate of 7 - 15 m³/h.

In an embodiment of the present invention, a primary pre-filter is first used to remove mechanical impurities and colloid from the hydrolysate; secondary treatment is then performed, using an activated carbon filter, molecular sieve and/or resin to adsorb small-molecule-substance impurities including chloride ions. In the secondary treatment, any one of the activated carbon filter, molecular sieve and resin is chosen, or two of them are used in combination, or all three are used in combination. In a specific embodiment of the present invention, the secondary treatment uses resin.

In a preferred embodiment of the present invention, a back-flushing system is provided simultaneously in the pre-treatment apparatus, to improve the impurity removal result of pre-treatment.

According to the present invention, the content of chloride ions in the hydrolysate is controlled at below 1 ppm, preferably below 0.5 ppm.

Research by the inventors has found that a linear body product obtained by separation from dimethyldichlorosilane hydrolysate with a chloride ion content of 3 ppm or above has unstable properties, and will undergo a condensation reaction by itself, resulting in increased viscosity, increased volatile content and increased turbidity, so that the product is unsatisfactory. It is very difficult to subject the linear body obtained to chlorine removal treatment in order to make the product satisfactory, and it is also very difficult to reduce the content of low volatiles therein. In the Chinese patent CN104031084B, the possibility of the isolated linear body product undergoing side-reactions can only be reduced by controlling the small-molecule removal temperature for crude linear body at a lower temperature (140 - 160°C); this is also the reason why the content of the linear body obtained after small-molecule removal at 200°C in Example 3 of that patent fell to 82%, much lower than the linear body content of 98% obtained at 150°C in Example 2. Research by the inventors has found that if the chlorine content in the hydrolysate is reduced to 1 ppm or below, in particular 0.5 ppm or below, before separating the cyclic body and linear body from the dimethyldichlorosilane hydrolysate, the linear body obtained has a low impurity content, is stable by itself and will not undergo a condensation reaction; furthermore, such a hydrolysate can tolerate a higher small-molecule removal temperature, thus enabling the separation of cyclic body and linear body to take place at a higher temperature, greatly increasing the efficiency of linear body separation, and in particular, significantly reducing the content of low volatiles.

According to the present invention, in order to improve the utilization of energy in the method process as a whole, a step S11 of preheating the pre-treated hydrolysate may be added in step S1 and step S2; specifically, the pre-treated hydrolysate obtained in step S1 is first preheated in a heat exchange apparatus, the heat of which may come from the cyclic body and/or linear body separated out in step S2. In an embodiment of the present invention, the heat exchange apparatus is an economizer.

According to the present invention, a preheating apparatus may be used in step S2 to heat the pre-treated hydrolysate to the temperature required for small-molecule removal at reduced pressure, before it enters a small-molecule removal apparatus to undergo small-molecule removal at reduced pressure. In an embodiment of the present invention, the hydrolysate is heated to 180 - 280°C, preferably 190 - 280°C, and more preferably 200 - 280°C.

According to the present invention, the small-molecule removal at reduced pressure in step S2 is carried out at a temperature of preferably 190 - 280°C, and more preferably 220 - 280°C.

According to the present invention, the small-molecule removal at reduced pressure in step S2 may use an apparatus which is capable of performing small-molecule removal at reduced pressure and commonly used in the art, including but not limited to a flash evaporation apparatus, a packed column or a falling-film evaporation apparatus, etc., as long as the apparatus achieves uniform distribution of the hydrolysate by structural configuration or packing distribution, etc. The reduced-pressure small-molecule removal apparatus may be a single reduced-pressure small-molecule removal device, or a cascaded series of multiple reduced-pressure small-molecule removal devices; that is, one stage of small-molecule removal at reduced pressure may be performed, or multiple stages (two or more stages) of small-molecule removal at reduced pressure may be performed.

In some embodiments of the present invention, step S2 uses two stages of small-molecule removal at reduced pressure; a first stage of small-molecule removal at reduced pressure has a temperature range of 180 - 280°C, preferably 200 - 280°C and more preferably 220 - 280°C, and a pressure ≤ -0.0955 MPa, a second stage of small-molecule removal at reduced pressure has a temperature range of 190 - 280°C, preferably 220 - 280°C and more preferably 240 - 280°C, and a pressure ≤ -0.0955 MPa, and the temperature of the second stage of small-molecule removal at reduced pressure is higher than the temperature of the first stage of small-molecule removal at reduced pressure. The cyclic body D4 and cyclic body D5, etc. obtained in the first stage of small-molecule removal at reduced pressure are discharged from the top of a first-stage reduced-pressure small-molecule removal apparatus, enter an apparatus top condenser, and are collected after condensing; the linear body resulting from the first stage of small-molecule removal at reduced pressure is discharged in a liquid state from the bottom of the first-stage reduced-pressure small-molecule removal apparatus, and enters a second-stage reduced-pressure small-molecule removal apparatus to undergo small-molecule removal at reduced pressure. The cyclic body and short linear body obtained in the second stage of small-molecule removal at reduced pressure are discharged from the top of the second-stage reduced-pressure small-molecule removal apparatus, enter an apparatus top condenser, and are collected after condensing; the liquid linear body obtained in the second stage of small-molecule removal at reduced pressure is discharged. The cyclic body obtained in the first stage of small-molecule removal at reduced pressure, and the cyclic body and short linear body obtained in the second stage of small-molecule removal at reduced pressure, may be combined using the same set of condensers and collected in a storage apparatus, or may be separately collected in corresponding, independent storage apparatuses using independent condensers.

In an embodiment of the present invention, in step S2, a flash evaporation apparatus and an upright falling-film evaporation apparatus connected in series are used to perform small-molecule removal at reduced pressure, wherein the flash evaporation has a temperature range of 180 - 280°C, preferably 200 - 280°C and more preferably 220 - 280°C, the falling-film evaporation has a temperature range of 190 - 280°C, preferably 220 - 280°C and more preferably 240 - 280°C, and the temperature of the falling-film evaporation is higher than the temperature of the flash evaporation. Dimethyldichlorosilane hydrolysate pre-heated to 180 - 280°C is sent to the flash evaporation apparatus, and undergoes a flash evaporation separating operation under conditions of ≤ -0.0955 MPa. The cyclic body D4 and cyclic body D5 are partially vaporized, and discharged from the top of the flash evaporation apparatus, enter a condenser at the top of the flash evaporation apparatus, and are collected after condensing; most of the linear body is in a liquid-phase state, and is discharged from the bottom of the flash evaporation apparatus. Base liquid of the flash evaporation apparatus enters the upright falling-film evaporation apparatus; under conditions of 190 - 280°C and ≤ -0.0955 MPa, a light component including cyclic body and short linear body in the base liquid is vaporized, and the heavy-component linear body remains in the liquid state. These enter a gas-liquid phase-separation space at the bottom of the falling-film evaporation apparatus at the same time. The light-component gas enters a condenser at the top of the flash evaporation apparatus under vacuum, and is collected after condensing; the heavy-component linear body liquid is discharged. In an embodiment of the present invention, the heavy-component linear body liquid is sent to an economizer by a linear body discharge pump, undergoes heat exchange with pre-treated hydrolysate, and is then cooled in a linear body cooling apparatus before being sent to a linear body storage apparatus. In said embodiment, the cyclic body obtained by flash evaporation, and the cyclic body and short linear body obtained by falling-film evaporation, may be combined and collected in a storage apparatus, or separately collected in corresponding, independent storage apparatuses.

An upright falling-film evaporator helps to uniformly distribute materials, so is a more preferred reduced-pressure small-molecule removal apparatus.

According to the present invention, the cyclic body and short linear body collected in step S2 may be used in other processes, including but not limited to: a process in which the cyclic body is used as a starting material to manufacture a product; and further separation of the cyclic body to obtain a cyclic body with a less varied composition.

In an embodiment of the present invention, the cyclic body and short linear body obtained in step S2 enters a treatment apparatus after condensing in the condenser at the top of the small-molecule removal apparatus, is then pumped out by a pump, and after water removal, is sent into a cyclic body and short linear body storage apparatus for use in the next process step. The abovementioned method of treating the cyclic body and short linear body is suitable for the cyclic body and short linear body which have been combined, and is also suitable for uncombined cyclic body, and the cyclic body and short linear body which have not been combined.

The small-molecule removal apparatus is operated under vacuum conditions; in an embodiment of the present invention, a vacuum duct connected to a vacuum pump is installed at an upper part of the condenser, to provide a vacuum for the entire system of the small-molecule removal apparatus.

According to the present invention, if the content of low volatiles in the linear body product obtained by small-molecule removal in step S2 does not meet the process requirements (the content of low volatiles is greater than 0.5%), step S2 may be repeated by means of a material return pipeline, until the content of low volatiles in the product is lower than 0.5%, after which it is discharged.

According to the present invention, the linear body isolated in step S2 is cooled to 20 - 50°C for collection.

The present invention further provides a production apparatus for the organosilicon linear body production method described above. According to the present invention, the apparatus comprises: a dimethyldichlorosilane hydrolysate pre-treatment apparatus and a reduced-pressure small-molecule removal apparatus.

In an embodiment of the present invention, the pre-treatment apparatus comprises a primary pre-filter and a secondary treatment apparatus; the primary pre-filter removes mechanical impurities and colloid by filtration, and the secondary treatment apparatus is an activated carbon filter, molecular sieve and/or resin.

In some embodiments of the present invention, the reduced-pressure small-molecule removal apparatus comprises two stages of reduced-pressure small-molecule removal devices connected in series. In an embodiment of the present invention, in the two stages of reduced-pressure small-molecule removal devices connected in series, a first-stage reduced-pressure small-molecule removal apparatus is a flash evaporation apparatus, and a second-stage reduced-pressure small-molecule removal apparatus is a falling-film evaporation apparatus.

According to the present invention, a preheating apparatus is installed between the pre-treatment apparatus and the reduced-pressure small-molecule removal apparatus.

According to the present invention, a heat exchange apparatus is installed between the pre-treatment apparatus and the preheating apparatus, the heat exchange apparatus being connected to a gas outlet and/or a liquid outlet of the reduced-pressure small-molecule removal apparatus. When the heat exchange apparatus is connected to the gas outlet or liquid outlet of the reduced-pressure small-molecule removal apparatus, the heat exchange apparatus has a set of ducts for allowing passage of the gas or liquid. When the heat exchange apparatus is connected to the gas outlet and liquid outlet of the reduced-pressure small-molecule removal apparatus, the heat exchange apparatus has two independent sets of ducts for allowing passage of the gas and liquid respectively.

According to the present invention, when the gas outlet of the reduced-pressure small-molecule removal apparatus is not connected to the heat exchange apparatus, a condenser is connected directly downstream of it. When the gas outlet of the reduced-pressure small-molecule removal apparatus is connected to the heat exchange apparatus, the condenser is connected downstream of a gas discharge port of the heat exchange apparatus. Based on the present invention, those skilled in the art will understand that the gas outlet of the reduced-pressure small-molecule removal apparatus may be a gas outlet of all reduced-pressure small-molecule removal devices in the reduced-pressure small-molecule removal apparatus, or a gas outlet of any one or more of the reduced-pressure small-molecule removal devices.

According to the present invention, the condenser is connected to a cyclic body treatment apparatus.

According to the present invention, the cyclic body treatment apparatus is connected to a cyclic body storage apparatus.

According to the present invention, when the liquid outlet of the reduced-pressure small-molecule removal apparatus is not connected to the heat exchange apparatus, a cooling apparatus is connected directly downstream of the liquid outlet. When the liquid outlet of the reduced-pressure small-molecule removal apparatus is connected to the heat exchange apparatus, the cooling apparatus is connected downstream of a liquid discharge port of the heat exchange apparatus. Based on the present invention, those skilled in the art will understand that, from the perspective of the operating conditions of small-molecule removal at reduced pressure, the liquid outlet of the reduced-pressure small-molecule removal apparatus is a liquid outlet of the reduced-pressure small-molecule removal device of the final stage in the reduced-pressure small-molecule removal apparatus.

According to the present invention, the cooling apparatus is connected to a linear body storage apparatus.

In a preferred embodiment of the present invention, the production apparatus for the organosilicon linear body production method described above comprises: a dimethyldichlorosilane hydrolysate pre-treatment apparatus and a reduced-pressure small-molecule removal apparatus. The pre-treatment apparatus comprises a primary pre-filter and a secondary treatment apparatus; the primary pre-filter removes mechanical impurities and colloid by filtration, and the secondary treatment apparatus is an activated carbon filter, molecular sieve and/or resin. The reduced-pressure small-molecule removal apparatus is a flash evaporation apparatus and a falling-film evaporation apparatus connected in series. A preheating apparatus is installed between the pre-treatment apparatus and the reduced-pressure small-molecule removal apparatus. A heat exchange apparatus is installed between the pre-treatment apparatus and the preheating apparatus, the heat exchange apparatus being connected to a gas outlet and/or a liquid outlet of the reduced-pressure small-molecule removal apparatus. When the gas outlet of the reduced-pressure small-molecule removal apparatus is connected to a heat exchange apparatus, a condenser is connected downstream of a discharge port for gas in the heat exchange apparatus; when the gas outlet of the reduced-pressure small-molecule removal apparatus is not connected to a heat exchange apparatus, a condenser is connected directly downstream of the gas outlet. When the liquid outlet of the reduced-pressure small-molecule removal apparatus (falling-film evaporation apparatus) is connected to a heat exchange apparatus, a cooling apparatus is connected downstream of a discharge port for the liquid in the heat exchange apparatus; when the liquid outlet of the reduced-pressure small-molecule removal apparatus (falling-film evaporation apparatus) is not connected to a heat exchange apparatus, a cooling apparatus is connected directly downstream of the liquid outlet. The condenser is connected to a cyclic body treatment apparatus. The cyclic body treatment apparatus is connected to a cyclic boy storage apparatus. The cooling apparatus is connected to a linear body storage apparatus.

The organosilicon linear body obtained by the method of the present invention has a viscosity of 50 - 120 mm²/s, a content of volatiles lower than 0.5%, and a chloride ion content lower than 1 ppm. The linear body may be widely used in the production of organosilicon downstream products such as 107 glue with a low content of cyclic body, amino silicone oil with a low content of cyclic body, methyl silicone oil with a low content of cyclic body, and vinyl silicone oil with a low content of cyclic body. When the linear body product is used to produce a downstream product, by the condensation reaction principle, no low boilers are produced, and the downstream product has a low content of volatiles, so can meet the requirements of products with a low content of volatiles.

The linear body referred to in the present invention is a mixture of hydroxy-terminated chain dimethylpolysiloxanes with a normal distribution of molecular weights, may be used as a starting material for organosilicon downstream products, and has advantages such as short polymerization time and a low content of volatiles.

### Brief description of the drawings

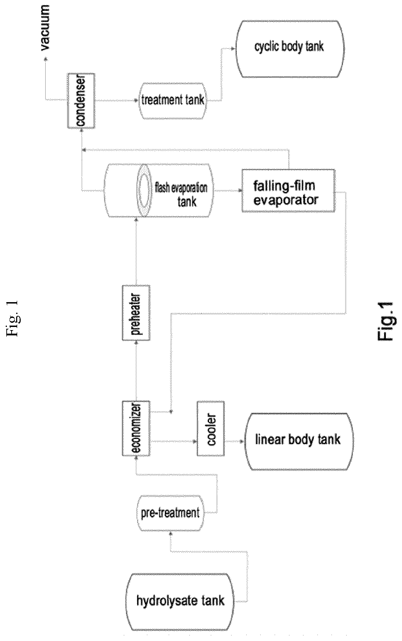

Fig. 1: apparatus and process flow chart in embodiments of the present invention.

### Particular embodiments

The present invention is described further below in conjunction with Examples. It must be explained that the Examples cannot be used to restrict the scope of protection of the present invention; those skilled in the art will understand that any improvements and changes made on the basis of the present invention are included in the scope of protection thereof.

All of the conventional chemical reagents used in the Examples below are commercially available.

The apparatus and process used in the Examples are as follows: a hydrolysate tank is connected to a pre-treatment apparatus; the pre-treatment apparatus is connected to an economizer; a heat exchange pipeline inlet of the economizer is connected to a bottom outlet of a falling-film evaporator, a heat exchange pipeline outlet of the economizer is connected to a cooler, the cooler is connected to a linear body tank, and an outlet of the economizer is connected to a preheater; the preheater is connected to a feed port of a flash evaporation tank; a condenser is connected to the top of the flash evaporation tank; the condenser is separately connected to a treatment tank and a vacuum pump; the treatment tank is connected to a cyclic body tank; a bottom outlet of the flash evaporation tank is connected to the falling-film evaporator; and the top of a gas-liquid phase-separation space at the bottom of the falling-film evaporator is connected to the condenser. Dimethyldichlorosilane hydrolysate from an upstream process is stored in the hydrolysate tank, and sent via a pipeline to the pre-treatment apparatus to undergo pre-treatment to lower the content of chloride ions therein. The pre-treated hydrolysate is sent via a pipeline to the economizer, where it undergoes heat exchange with linear body discharged from the bottom of the falling-film evaporator, and is thus preheated. The preheated hydrolysate is then sent via a pipeline to the preheater, where it is heated to flash evaporation temperature before being sent to the flash evaporation tank. Cyclic body in the hydrolysate is vaporized in the flash evaporation tank, discharged from the top of the flash evaporation tank, condensed in the condenser and collected in the treatment tank. Linear body in the hydrolysate remains in a liquid state in the flash evaporation tank, and is discharged from the bottom of the flash evaporation tank and then sent into the falling-film evaporator; after small-molecule removal at reduced pressure, cyclic body and short linear body therein are vaporized, discharged from the top of the gas-liquid phase-separation space at the bottom of the falling-film evaporator, condensed in the condenser and collected in the treatment tank. Liquid linear body is discharged from the bottom of the falling-film evaporator, sent to the economizer to undergo heat exchange with the pre-treated hydrolysate, then sent to the cooler to be cooled, and then collected in the linear body tank. The cyclic body and short linear body in the treatment tank are sent into the cyclic body tank for storage.

### Example 1:

### (1) Pre-treatment and heating of dimethyldichlorosilane hydrolysate

Dimethyldichlorosilane hydrolysate with a flow rate of 8 m³/h from upstream mainly contains 60% linear siloxane, 27% octamethylcyclotetrasiloxane (D4), 8% decamethylcyclopentasiloxane (D5), 3% D6, 1% D7 and other trace impurities, among which the main impurities comprise water, chloride ions and hydrocarbons. A primary pre-filter is used to remove mechanical impurities and colloid from the hydrolysate, and D201 resin is used in secondary treatment. The content of chloride ions in the hydrolysate after filtration treatment is 1 ppm. The pre-treated hydrolysate is sent to a linear/cyclic separation starting material storage tank, and sent to an economizer by a flash evaporation feed pump. After heat exchange in the economizer with a high-temperature linear body product, the hydrolysate is heated to 220°C in a preheater.

### (2) Flash evaporation of hydrolysate at reduced pressure

The hydrolysate is sent to a flash evaporation tank, and undergoes separation by flash evaporation at a negative pressure of -0.098 MPa; cyclic body D4 and cyclic body D5 are partially vaporized, and discharged from the top of the flash evaporation tank; most of the linear body is in a liquid-phase state, and is discharged from the bottom of the flash evaporation tank.

### (3) Cooling and treatment of cyclic body

After entering a gas-phase pipe of the flash evaporation tank, the cyclic body is condensed in a column-top condenser and then enters a treatment tank; the cyclic body is pumped out by a pump, and sent into a cyclic body tank for use in the next process step.

### (4) Falling-film evaporation and cooling of linear body

Linear body exiting the bottom of the flash evaporation tank has a small amount of cyclic body entrained therein, and undergoes further treatment at -0.098 MPa and a temperature of 240°C by falling-film evaporation to obtain linear body, which is sent by a discharge pump to the economizer to undergo heat exchange with the pre-treated hydrolysate, then cooled to room temperature in a cooler, and sent to a product storage tank.

The linear body product obtained in Example 1 has the structural formula 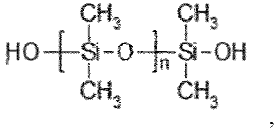 with molecular weights of 4000 - 7000 in a normal distribution; see Table 1 for test data.

### Example 2:

The operating steps and associated parameters of Example 2 are the same as those of Example 1, except that in Example 2 the flash evaporation temperature is 180°C and the temperature of the falling-film evaporation is 200°C.

See Table 1 for the test results for the organosilicon linear body obtained in Example 2.

### Comparative example 1

The experimental steps of Comparative example 1 are the same as the operating steps of Example 1, except that: the hydrolysate is not pre-treated, but directly undergoes preheating and subsequent flash evaporation and falling-film evaporation; the chloride ion content of the hydrolysate is 3 ppm.

See Table 1 for the test results for the organosilicon linear body obtained in Comparative example 1.

### Comparative example 2

The experimental steps of Comparative example 2 are the same as the operating steps of Example 2, except that: the hydrolysate is not pre-treated, but directly undergoes preheating and subsequent flash evaporation and falling-film evaporation; the chloride ion content of the hydrolysate is 3 ppm.

See Table 1 for the test results for the organosilicon linear body obtained in Comparative example 2.

**Table 1: Product test results**

| | Product index requirements | Example 1 | Example 2 | Comparative example 1 | Comparative example 2 |
|---|---|---|---|---|---|
| Kinematic viscosity mm²/s | 50 to 120 | 85 | 78 | 145 | 135 |
| Content of volatiles % | ≤ 1.0 | 0.45 | 1.04 | 0.95 | 1.54 |
| Chromaticity Gardner | ≤ 10 | 8 | 8 | 12 | 15 |
| D₄% | ≤ 0.05 | 0.02 | 0.15 | 0.18 | 0.25 |
| D₅% | ≤ 0.05 | 0.01 | 0.08 | 0.09 | 0.16 |
| Total cyclic % | ≤ 0.5 | 0.15 | 0.6 | 0.6 | 0.9 |
| Chloride ions ppm | ≤ 0.3 | 0.12 | 0.2 | 0.58 | 0.7 |
| SiH ppm | ≤ 13 | 10 | 11 | 15 | 16 |

| | | | | | |
|---|---|---|---|---|---|
| Note: Kinematic viscosity was determined using the method of Q/LXAXJ 02. The content of volatiles was determined using the method of Q/LXAXJM 21. Chromaticity was determined using the method of Q/LXAXJM 01. The D4, D5 and total cyclic body contents were determined by chromatography. The chloride ion content was determined by ion chromatography. | | | | | |

It was found in a multiple-batch experiment that when the original chloride ion content of the hydrolysate was greater than or equal to 3 ppm, and the cyclic body and linear body were separated directly without any pre-treatment, no matter how the temperature used for small-molecule removal at reduced pressure was controlled, the linear body product obtained had unstable properties, would undergo a condensation reaction by itself, had increased viscosity, increased content of volatiles and increased turbidity, so did not meet the relevant quality specifications, tested as follows:

| Kinematic viscosity mm²/s | Content of volatiles % | Chromaticit y Gardner | D₄% | D₅% | Total cyclic % | Chloride ions, ppm | SiH, ppm |
|---|---|---|---|---|---|---|---|
| 50 to 120 | ≤ 1.0 | ≤ 10 | ≤ 0.05 | ≤ 0.05 | ≤ 0.5 | ≤ 0.3 | ≤ 13 |
| 110 to 150 | 0.91 to 2.15 | 10 to 15 | 0.11 to 0.56 | 0.09 to 0.21 | 0.6 to 1.9 | 0.50 to 1.8 | 10 to 30 |

It was found in a multiple-batch experiment that once the chloride ion content of the hydrolysate has been reduced to 1 ppm or below by pre-treatment, when the temperature of small-molecule removal at reduced pressure was in the more preferred range of 220 - 280°C, a linear body product meeting the relevant quality specifications could be obtained, tested as follows:

| Kinematic viscosity mm²/s | Content of volatiles % | Chromaticit y Gardner | D₄% | D₅% | Total cyclic % | Chloride ions, ppm | SiH, ppm |
|---|---|---|---|---|---|---|---|
| 50 to 120 | ≤ 1.0 | ≤ 10 | ≤ 0.05 | ≤ 0.05 | ≤ 0.5 | ≤ 0.3 | ≤ 13 |
| 75 to 95 | 0.3 to 0.5 | 6 to 10 | 0.01 to 0.03 | 0.01 to 0.03 | 0.1 to 0.2 | 0.04 to 0.21 | 5 to 12 |

It can be seen from the experimental results when the original chloride ion content of the dimethyldichlorosilane hydrolysate was 3 ppm or above, the linear body product obtained had unstable properties, and was likely to undergo a condensation reaction by itself, resulting in increased viscosity, increased content of volatiles and increased turbidity, so that the product was unsatisfactory. Conversely, once the chloride ion content of the hydrolysate had been reduced, the small-molecule removal at reduced pressure to which the hydrolysate was subjected was able to tolerate a higher treatment temperature; with regard to the relevant indices of the organosilicon linear body obtained, in addition to a reduction in chlorine content, the chromaticity was reduced, the content of volatiles was reduced to below 1%, and the kinematic viscosity was controlled at below 120 mm²/s.

Embodiments of the present invention have been described above. However, the present invention is not limited to the above embodiments. Any modification, equivalent substitution, improvement, etc., made within the spirit and principles of the present invention, shall be included in the scope of protection thereof.

## Claims

1. A method for producing an organosilicon linear body product, **characterized by** comprising the following steps:
S1: pre-treating dimethyldichlorosilane hydrolysate so that the content of chloride ions in the hydrolysate after pre-treatment is less than or equal to 1 ppm;
S2: subjecting the hydrolysate resulting from the pre-treatment of step S1 to small-molecule removal at reduced pressure, to separate an organosilicon cyclic body and an organosilicon linear body therein, wherein the small-molecule removal at reduced pressure is carried out at a temperature of 180 - 280°C and a pressure of ≤ -0.0955 MPa.

2. The production method as claimed in claim 1, **characterized in that** in step S1, the dimethyldichlorosilane hydrolysate flows through a pre-treatment apparatus of step S1 at a flow rate of 3 - 15 m³/h.

3. The production method as claimed in claim 1 or 2, **characterized in that** in step S1, a primary pre-filter is first used to remove mechanical impurities and colloid from the hydrolysate; secondary treatment is then performed, using an activated carbon filter, molecular sieve and/or resin to adsorb small-molecule-substance impurities including chloride ions;
preferably, a back-flushing system is provided in the pre-treatment apparatus.

4. The production method as claimed in any one of claims 1-3, **characterized in that** step S2 uses two stages of small-molecule removal at reduced pressure; a first stage of small-molecule removal at reduced pressure has a temperature range of 180 - 280°C, preferably 200 - 280°C and more preferably 220 - 280°C, and a pressure ≤ -0.0955 MPa, a second stage of small-molecule removal at reduced pressure has a temperature range of 190 - 280°C, preferably 220 - 280°C and more preferably 240 - 280°C, and a pressure ≤-0.0955 MPa, and the temperature of the second stage of small-molecule removal at reduced pressure is higher than the temperature of the first stage of small-molecule removal at reduced pressure.

5. The production method as claimed in any one of claims 1-4, **characterized in that** in step S2, before the hydrolysate undergoes small-molecule removal at reduced pressure, the hydrolysate resulting from the pre-treatment of step S1 is heated to a temperature required for small-molecule removal at reduced pressure, and then enters a small-molecule removal apparatus to undergo small-molecule removal at reduced pressure;
preferably, the hydrolysate resulting from the pre-treatment of step S1 is heated to 180 - 280°C.

6. The production method as claimed in any one of claims 1-5, **characterized in that** a step S11 of preheating the pre-treated hydrolysate is added in step S1 and step S2; the pre-treated hydrolysate obtained in step S1 is first preheated in a heat exchange apparatus, the heat of which comes from the cyclic body and/or linear body separated out in step S2.

7. The production method as claimed in any one of claims 1-6, **characterized in that** when the content of low volatiles in the linear body obtained by small-molecule removal in step S2 is greater than 0.5%, step S2 is repeated by means of a material return pipeline, until the content of low volatiles in the linear body is lower than 0.5%, after which it is discharged.

8. A production apparatus for the production method as claimed in any one of claims 1 - 7, **characterized in that** the apparatus comprises a dimethyldichlorosilane hydrolysate pre-treatment apparatus and a reduced-pressure small-molecule removal apparatus;
preferably, a preheating apparatus is installed between the pre-treatment apparatus and the reduced-pressure small-molecule removal apparatus;
preferably, a heat exchange apparatus is installed between the pre-treatment apparatus and the preheating apparatus, the heat exchange apparatus being connected to a gas outlet and/or a liquid outlet of the reduced-pressure small-molecule removal apparatus;
preferably, when the gas outlet of the reduced-pressure small-molecule removal apparatus is not connected to a heat exchange apparatus, a condenser is connected directly downstream of the gas outlet; when the gas outlet of the reduced-pressure small-molecule removal apparatus is connected to a heat exchange apparatus, the condenser is connected downstream of a gas discharge port of the heat exchange apparatus;
preferably, the condenser is connected to a cyclic body treatment apparatus;
preferably, the cyclic body treatment apparatus is connected to a cyclic body storage apparatus;
preferably, when the liquid outlet of the reduced-pressure small-molecule removal apparatus is not connected to a heat exchange apparatus, a cooling apparatus is connected directly downstream of the liquid outlet; when the liquid outlet of the reduced-pressure small-molecule removal apparatus is connected to a heat exchange apparatus, the cooling apparatus is connected downstream of a liquid discharge port of the heat exchange apparatus;
preferably, the cooling apparatus is connected to a linear body storage apparatus.

9. The production apparatus as claimed in claim 8, **characterized in that** the pre-treatment apparatus comprises a primary pre-filter and a secondary treatment apparatus; the primary pre-filter removes mechanical impurities and colloid by filtration, and the secondary treatment apparatus is an activated carbon filter, molecular sieve and/or resin.

10. The production apparatus as claimed in claim 8 or 9, **characterized in that** the reduced-pressure small-molecule removal apparatus is two stages of reduced-pressure small-molecule removal devices connected in series.
